# EUROPEAN PATENT SPECIFICATION

(11) **EP 1 317 885 B1**
(45) Date of publication and mention of the grant of the patent: **16.04.2008**
(21) Application number: 02447222.7
(22) Date of filing: 14.11.2002
(51) Int. Cl.: A23N 7/00, A23N 15/00

(54) **Improved leek peeling machine**
Maschine zum Schälen von Porree
Machine pour l'épluchage de poireaux

(30) Priority: 04.12.2001 BE 200100785; 03.07.2002 BE 200200424
(43) Date of publication of application: 11.06.2003
(73) Proprietor: Van Bedts, Jan, 2520 Ranst (BE)
(72) Inventor: Van Bedts, Jan, 2520 Ranst (BE)
(74) Representative: Hoorweg, Petrus Nicolaas

(56) References cited:
- EP-A- 0 193 476
- WO-A-01/74183
- FR-A- 2 606 600
- FR-A- 2 614 767
- FR-A- 2 663 206
- FR-A- 2 706 256
- NL-A- 9 300 311

## Description

The invention refers to an improved leek peeling machine according to the preamble of claim 1 and to a method for washing and peeling leeks according to the preamble of claim 9.

Such a machine and method are known from WO 01/74183.

Such leek peeling machine has been known for some considerable time, but its result leaves much to be desired. Too much work still has to be done, i.e. manual finish-peeling of the leek afterwards and much waste still has to be cleared afterwards.

Some machines are slow-working and consume too much water. Often too much personnel is appointed to do the job.

The purpose of the invention is to build a leek peeling machine fitted with devices enabling the leek peeling machine to wash and cut the leek more efficiently and quicker, and then peel it thoroughly until it arrives in a case.

To achieve this object, the invention consists of the machine of claim 1 and the method of claim 9. In that way the improved leek peeling machine is able to successively wash the leek, brush out the roots, cut off the roots, cut the leaves to size, peel off the excess leaves, without interruption, after which the leek is ready to be packed in cases.

Good results can be obtained if the washing street has a smart system whereby less water is consumed when the leek is being washed.

According to the invention, a correction roller is strongly preferable to push the leek lying in rows nicely into its place until a straight line is formed.

After being washed, the roots are brushed horizontally by means of a rotating brush at the bottom of the leek, in order to be able to deliver clean leek.

In addition, after the leek has been washed and the roots have been brushed, the roots are cut off by two rotating disc knives in a benefit offering way, whereby the said knives grind each other by friction.

As far as the further processing of the leek is concerned, the leek is cut to size at its top by the fixed leaf knife.

According to the invention, a peeling drum is used to pull off the excess leek leaves. The peeling drum is composed of two rotating strips fitted with rubber tops pulling the leek. The leek is positioned between the two strips.

The improved leek peeling machine can further be fitted with a tail puller that is able to pull off the hanging leaf remnants. The tail puller has two interacting rotating toothed rollers to which the hanging leaves find their way and where they are pulled off.

Near the peeling drum and the tail puller, the machine can also be fitted in a benefit offering way with a clamping strip preventing the leek from being pushed away when the leaves are being pulled off.

The installation of the improved leek peeling machine is further completed by an export conveyor, cases, a discharge conveyor, an outside discharge conveyor and a leaves discharge conveyor.

With reference to the construction example shown by the drawings, the improved leek peeling machine will now be discussed and explained.

In the construction example shown by the drawings a number of details that are essential for a good working of the construction, but superfluous as far as the explanation of this invention is concerned have been left out. Such details include means for bearing and securing a number of components, while on the other hand a number of components is shown as a whole. In practice, however, a number of parts will have to be composed in order to be able to mount them. On the other hand, the place where the machine has to be installed is also left out of consideration.
Figure 1 shows a side view of the improved leek peeling machine.
Figure 2 shows a view from above of the same leek peeling machine.
Figure 3 shows a side view of the root brush with the two rotating disc knives
Figure 4 shows a front view of the same root brush with the two disc knives.
Figure 5 shows a view from above of the same brush with knives.
Figure 6 shows a front view of the peeling drum of the leek peeling machine.
Figure 7 shows a side view of the same peeling drum of the leek peeling machine.
Figure 8 shows a view from above of figure 6 and figure 7 of the same machine.

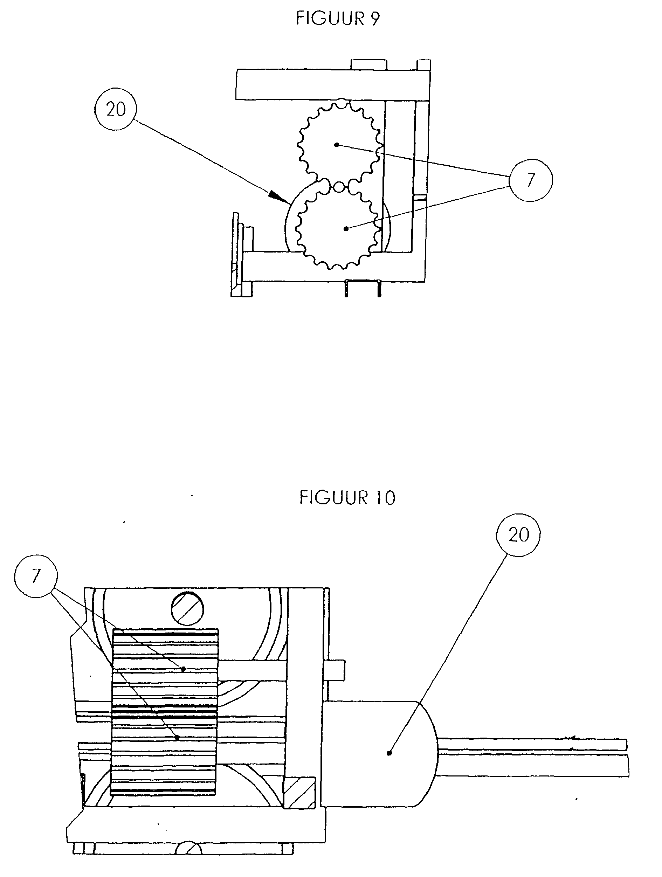

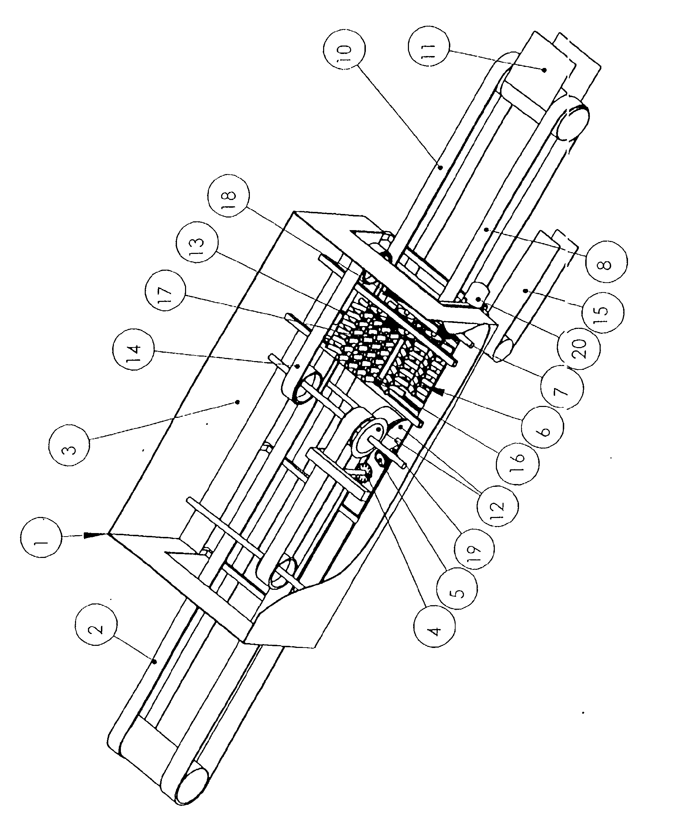

Figure 9 shows a front view of the tail puller of the leek peeling machine.
Figure 10 shows a side view of the tail puller.

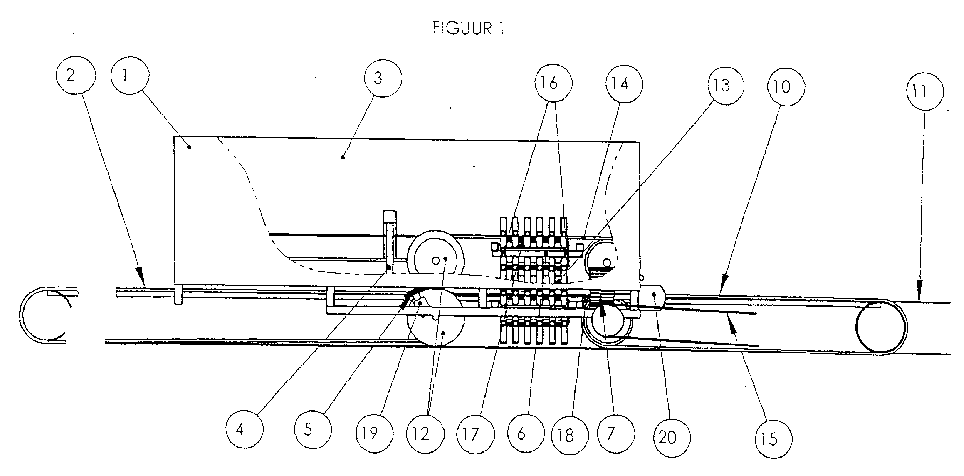

The construction form shown in figure 1 includes the general construction of the machine 1, the feed belt 2, the washing street 3, the correction roller 4, the root brush 5, the peeling drum 6, the tail puller 7, the export conveyor 8, the discharge conveyor 10, the outside discharge conveyor 11, the two rotating root disc knives 12, the leaf knife 13, the clamping strip 14, the leaves discharge conveyor 15, the peeling drum chain 16, the rubber tops laths 17, the peeling drum motor 18, the brush motor 19, and the tail puller motor 20.

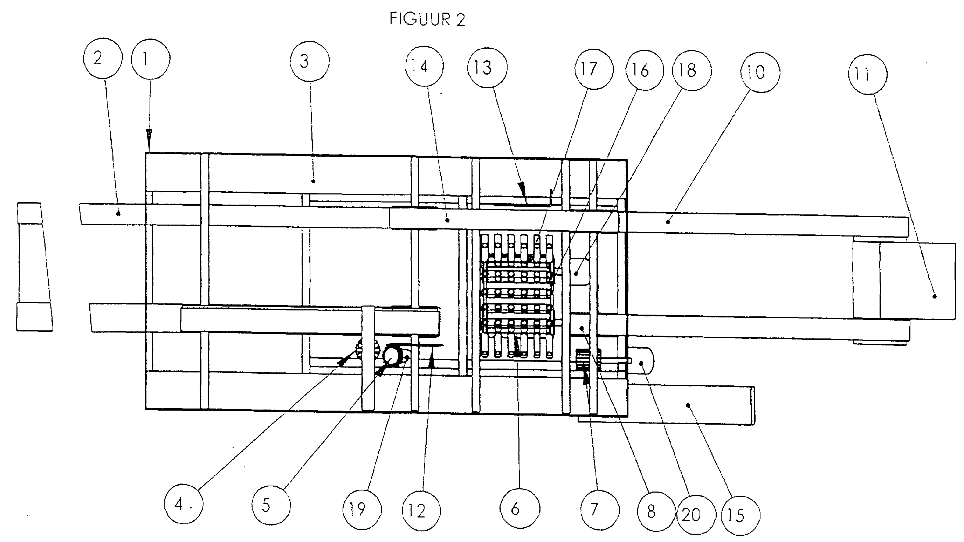

The installation of an improved leek peeling machine 1 shown in figures 1 and 2 includes the feed belt 2 that conveys the leek to the washing street where the leek is washed, consuming a calculated amount of water in order to save water.

The correction roller 4 can push the leek nicely into a row, which is necessary to guarantee that the work is properly done. Then the leek passes a root brush 5 where the leek is brushed at its bottom horizontally before the rotating disc knives 12 cut off one half of the said roots.

Then the leek arrives in the peeling drum 6 where the excess leaves are removed. Next the leek still has to pass the tail puller 7 to pull off the leaf remnants. There is a clamping strip 14 near the peeling drum 6 and the tail puller 7 preventing the leek from being pushed away when the leaves are being pulled off. As far as its further processing is concerned, the leek can be cut to size at its top by means of the fixed leaf knife 13.

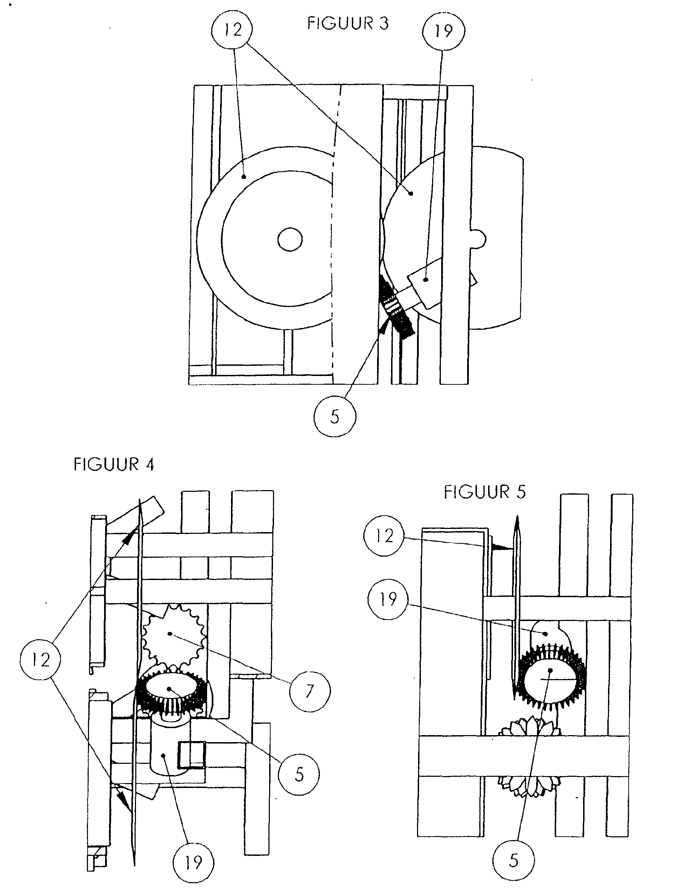

Figures 3, 4 and 5 show the tail puller 7 and the two rotating disc knives 12.

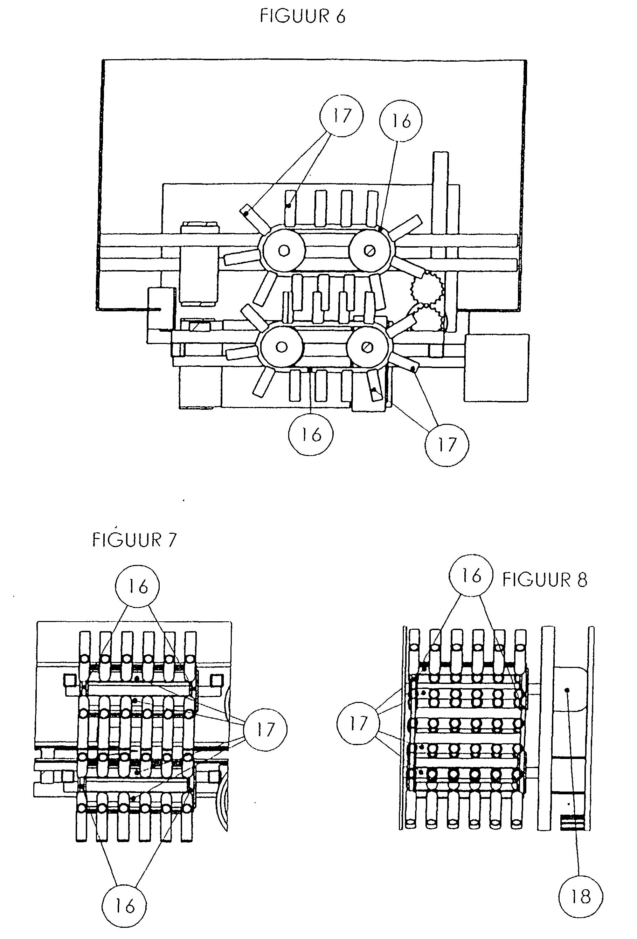

Figures 6, 7 and 8 show the three views of the peeling drum 6. The peeling drum 6 is composed of two strips fitted with chains 16, rubber tops laths 17, and is driven by a motor 18.

The rotation brush 5, the disc knives 12, as well as the tail puller 7 are also fitted with a motor.

## Claims

1. Improved leek peeling machine for washing leeks and performing subsequent operations to make it ready for sale, comprising a washing street (3) for washing the leeks (3), means (12) for cutting off the roots of the leeks, means (13) for cutting the leaves of the leeks to size, and means (6) for peeling off the excess leaves of the leeks, **characterized in that** after the washing street (3) and before the means for cutting the roots (12), there is provided a conveyor means for the leeks with a conveying direction, and a rotating brush (5) for brushing the roots of the leeks, said rotating brush having a rotation axis which is suitably inclined relative to the conveying direction, such that the roots are brushed out horizontally in the longitudinal direction of the leeks by said rotating brush, and **in that** after the means for peeling off the excess leaves is provided a tail puller (7) for pulling off the leaf remnants.

2. Improved leek peeling machine according to claim 1, **characterized in that** the tail puller (7) has two interacting rotating toothed rollers to which the hanging leaves find their way and where they are pulled off.

3. Improved leek peeling machine according to claim 2, **characterized in that** the interacting rotating toothed rollers are rotatable around an axis parallel with the conveying direction of the leeks.

4. Improved leek peeling machine according to any of the previous claims, **characterized in that** after the rotating brush there are provided two rotating disc knives (12) grinding each other by friction for cutting of the roots.

5. Improved leek peeling machine according to any of the previous claims, **characterized in that** before the brush (5) there is provided a correction roller (4) for positioning the leeks nicely in a row.

6. Improved leek peeling machine according to any of the previous claims, **characterized in that** the means for peeling off the excess leaves (6) consist of a peeling drum (6) which is composed of two straps fitted with rubber tops between which the leeks are positioned, which straps are moveable in the same direction to pull off the excess leaves by means of the tops.

7. Improved leek peeling machine according to any of the previous claims, **characterized in that** there is provided a clamping strip (14) for preventing the leeks from being pushed away when their leaves are being pulled off by the means for peeling off the excess leaves (6).

8. Improved leek peeling machine according to any of the preceding claims, **characterized in that** there is further provided a feed belt (2) for conveying the leeks to be peeled and washed to the washing street (3), an export conveyor (8), cases (9), a discharge conveyor (10), an outside discharge conveyor (11) and a leaves discharge conveyor (15).

9. Method for washing and peeling leeks and performing subsequent operations to make it ready for sale, wherein the leeks (3) are washed, the roots are cut off, the leaves are cut to size (13), and the excess leaves (6) are peeled off, **characterized in that** after the leeks are being washed and before the roots are cut off, the roots of the leeks are brushed out horizontally in the longitudinal direction of the leeks by a rotating brush, and **in that** after the peeling off of the excess leaves, the hanging leaf remnants are pulled off by the puller (7).

10. Method according to claim 9, **characterized in that** after being washed (3) and brushed (5), one half of the roots is cut off by rotating disc knives (12) whereby the said knives grind each other by friction.

11. Method according to any of the claims 9-10, **characterized in that** the leeks are cut to size at their top by the leaf knife (13).

12. Method according to any of the claims 9-11, **characterized in that** the rotating brush (5) is sprinkled.

13. Method according to any of the claims 9-12, **characterized in that** after being cleaned and peeled, the leeks arrive at an export conveyor (8) to end up in cases (9).

## Patentansprüche

1. Verbesserte Maschine zum Schälen von Porree und dem Durchführen nachfolgender Arbeitsschritte, um den Porree verkaufsfertig zu machen, eine Waschstraße (3) zum Waschen des Porrees (3), Mittel (12) zum Abschneiden der Porree-Wurzeln, Mittel (13) zum Zuschneiden der Blätter und Mittel (6) zum Abschälen überflüssiger Blätter des Porrees umfassend,
**dadurch gekennzeichnet, dass**
nach der Waschstraße (3) und vor den Mitteln zum Abschneiden der Wurzeln (12) ein Transportmittel für den Porree mit einer Transportrichtung und eine rotierende Bürste (5) zum Abbürsten der Porree-Wurzeln ausgebildet ist, wobei die rotierende Bürste eine Rotationsachse aufweist, die in geeigneter Weise relativ zur Transportrichtung geneigt ist, so dass die Wurzeln horizontal in der Längsrichtung des Porrees durch die rotierende Bürste ausgebürstet werden, und dadurch, dass nach den Mitteln zum Abschälen überflüssiger Blätter ein Endabzieher (7) vorgesehen ist, um die Blattreste abzuziehen.

2. Verbesserte Maschine zum Abschälen von Porree gemäß Anspruch 1,
**dadurch gekennzeichnet, dass**
der Endabzieher (7) zwei interagierende rotierende gezahnte Rollen aufweist, zu denen die hängenden Blätter hingeführt werden und wo sie abgezogen werden.

3. Verbesserte Maschine zum Abschälen von Porree gemäß Anspruch 2,
**dadurch gekennzeichnet, dass**
die interagierenden rotierenden gezahnten Rollen um eine Achse parallel zur Transportrichtung der Blätter rotierbar sind.

4. Verbesserte Maschine zum Schälen von Porree gemäß einem der vorhergehenden Ansprüche,
**dadurch gekennzeichnet, dass**
nach der rotierenden Bürste zwei rotierende Scheibenmesser (12) vorgesehen sind, die einander durch Reibung schleifen, um die Wurzeln zu schneiden.

5. Verbesserte Maschine zum Schälen von Porree gemäß einem der vorhergehenden Ansprüche,
**dadurch gekennzeichnet, dass**
vor der Bürste (5) eine Korrekturrolle (4) zur passenden Anordnung des Porrees in einer Reihe vorgesehen ist.

6. Verbesserte Maschine zum Schälen von Porree gemäß einem der vorhergehenden Ansprüche,
**dadurch gekennzeichnet, dass**
die Mittel zum Abschälen der überflüssigen Blätter (6) aus einer Schältrommel (6) bestehen, die aus zwei Bändern besteht, die mit Gummiaufsätzen zusammengebaut sind, zwischen denen der Porree positioniert wird, wobei die Bänder in dieselbe Richtung bewegbar sind, um überflüssige Blätter durch die Aufsätze zu entfernen.

7. Verbesserte Maschine zum Schälen von Porree gemäß einem der vorhergehenden Ansprüche,
**dadurch gekennzeichnet, dass**
eine Spannleiste (14) ausgebildet ist, um zu verhindern, dass der Porree weggeschoben wird, wenn die Blätter durch die Mittel zum Abschälen überflüssiger Blätter (6) abgezogen werden.

8. Verbesserte Maschine zum Schälen von Porree gemäß einem der vorhergehenden Ansprüche,
**dadurch gekennzeichnet, dass**
weiterhin ein Zufuhrband (2) zum Transport des zu schälenden und in der Waschstraße (3) zu waschenden Porrees, ein Ausgabetransportband (8), Behälter (9), ein Abfalltransportband (10), ein äußeres Abfalltransportband (11) und ein Blattabfall-Transportband (15) vorgesehen sind.

9. Verfahren zum Waschen und Schälen von Porree und dem Durchführen nachfolgender Arbeitsschritte, um den Porree verkaufsfertig zu machen, wobei der Porree (3) gewaschen wird, die Wurzeln abgeschnitten werden, die Blätter zugeschnitten werden (13), und die überflüssigen Blätter (6) abgeschält werden, **dadurch gekennzeichnet, dass**
nach dem Waschen des Porrees und vor dem Abschneiden der Wurzeln die Wurzeln des Porrees horizontal in Längsrichtung des Porrees durch eine rotierende Bürste ausgebürstet werden,
und dadurch, dass nachdem die überflüssigen Blätter abgeschält wurden, die hängenden Blattreste durch den Abzieher (7) abgezogen werden.

10. Verfahren gemäß Anspruch 9,
**dadurch gekennzeichnet, dass**
nach dem Waschen (3) und Bürsten (5) eine Hälfte der Wurzeln durch die drehenden Scheibenmesser (12) abgeschnitten wird, wobei die Messer einander durch Reibung schleifen.

11. Verfahren gemäß einem der Ansprüche 9 bis 10,
**dadurch gekennzeichnet, dass**
der Porree durch das Porreemesser (13) oben auf eine Größe zugeschnitten wird.

12. Verfahren gemäß einem der Ansprüche 9 bis 11,
**dadurch gekennzeichnet, dass**
die rotierende Bürste (5) besprengt wird.

13. Verfahren gemäß einem der Ansprüche 9 bis 12,
**dadurch gekennzeichnet, dass**
der Porree nach dem Reinigen und Schälen an einem Ausfuhrtransportband (8) ankommt und in Behälter (9) eingefügt wird.

## Revendications

1. Machine à éplucher des poireaux améliorée destinée à laver des poireaux et à exécuter des opérations complémentaires afin de les préparer à la vente, comprenant un circuit de lavage (3) destiné à laver les poireaux (3), des moyens (12) destinés à couper les racines des poireaux, des moyens (13) destinés à couper les feuilles des poireaux à la dimension, et des moyens (6) destinés à éplucher les feuilles en excès des poireaux, **caractérisée en ce qu'**après le circuit de lavage (3) et avant les moyens de découpe des racines (12), il est agencé, pour les poireaux, un moyen formant convoyeur avec un sens d'entraînement, et une brosse tournante (5) destinée à brosser les racines des poireaux, ladite brosse tournante présentant un axe de rotation qui est incliné de manière appropriée par rapport la direction d'entraînement, de telle sorte que les racines sont brossées horizontalement dans la direction longitudinale des poireaux par ladite brosse tournante, et **en ce qu'**après les moyens destinés à éplucher les feuilles en excès il est agencé un extracteur final (7) destiné à extraire les feuilles résiduelles.

2. Machine à éplucher des poireaux améliorée selon la revendication 1, **caractérisée en ce que** ledit extracteur final (7) comporte deux rouleaux dentés rotatifs coopérants sur lesquels les feuilles suspendues trouvent leur chemin et où elles sont éliminées.

3. Machine à éplucher des poireaux améliorée selon la revendication 2, **caractérisée en ce que** les rouleaux dentés rotatifs coopérants peuvent tourner autour d'un axe parallèle à la direction d'entraînement des poireaux.

4. Machine à éplucher des poireaux améliorée selon l'une quelconque des revendications précédentes, **caractérisée en ce qu'**après la brosse tournante, il est agencé deux couteaux en disque tournants (12) entraînés l'un par l'autre par frottement afin de couper les racines.

5. Machine à éplucher des poireaux améliorée selon l'une quelconque des revendications précédentes, **caractérisée en ce qu'**avant la brosse (5) il est agencé un rouleau de correction (4) afin de positionner correctement les poireaux sur une rangée.

6. Machine à éplucher des poireaux améliorée selon l'une quelconque des revendications précédentes, **caractérisée en ce que** le moyens destinés à éplucher les feuilles en excès (6) consistent en un tambour d'épluchage (6) qui est composé de deux bandes équipées des parties supérieures en caoutchouc entre lesquelles les poireaux sont positionnés, lesquelles bandes peuvent être déplacées dans la même direction afin d'arracher les feuilles en excès au moyen des parties supérieures.

7. Machine à éplucher des poireaux améliorée selon l'une quelconque des revendications précédentes, **caractérisée en ce qu'**il est prévu une bande de blocage (14) afin d'empêcher que les poireaux soient repoussés lorsque leurs feuilles sont entraînées par les moyens destinés à éplucher les feuilles en excès (6).

8. Machine à éplucher des poireaux améliorée selon l'une quelconque des revendications précédentes, **caractérisée en ce qu'**il est, en outre, agencé un tapis d'alimentation (2) destiné à entraîner les poireaux à éplucher et laver vers le circuit de lavage (3), un convoyeur de sortie (8), des caisses (9), un convoyeur de déchargement (10), un convoyeur de déchargement externe (11) et un convoyeur de déchargement de feuilles (15).

9. Procédé de lavage et d'épluchage de poireaux et d'exécution d'opérations complémentaires afin de les préparer à la vente, dans lequel les poireaux (3) sont lavés, les racines sont découpées, les feuilles sont coupées à la dimension (13), et les feuilles en excès (6) sont épluchées, **caractérisé en ce qu'**après que les poireaux ont été lavés et avant que les racines soient coupées, les racines des poireaux sont brossées horizontalement dans la direction longitudinale des poireaux par une brosse tournante, et **en ce qu'**après l'épluchage des feuilles en excès, les feuilles en suspension restantes sont entraînées par l'extracteur (7).

10. Procédé selon la revendication 9, **caractérisé en ce qu'**après avoir été lavé (3) et brossé (5), une moitié des racines est coupée par des couteaux à disque tournant (12) de telle sorte que lesdits couteaux sont entraînés l'un par l'autre par friction.

11. Procédé selon l'une quelconque des revendications 9 et 10, **caractérisé en ce que** les poireaux sont coupés à la dimension au niveau de leur partie supérieure par le couteau à feuille (13).

12. Procédé selon l'une quelconque des revendications 9 à 11, **caractérisé en ce que** la brosse tournante (5) est arrosée.

13. Procédé selon l'une quelconque des revendications 9 à 12, **caractérisé en ce qu'**après avoir été nettoyé et épluché, les poireaux arrivent au niveau d'un convoyeur de sortie (8) afin de finir dans des caisses (9).
